# EUROPEAN PATENT APPLICATION

(11) **EP 4 042 872 A1**
(43) Date of publication of application: **17.08.2022**
(21) Application number: 20875282.4
(22) Date of filing: 07.10.2020
(51) Int. Cl.: A23L 2/00, A23L 2/02, A23L 2/52, A23L 2/54, A23L 2/56, C12G 3/04, C12G 3/06

(54) **PACKAGED BEVERAGE AND MANUFACTURING METHOD THEREOF**

(30) Priority: 09.10.2019 JP 2019186275; 12.05.2020 JP 2020084002
(71) Applicant: Asahi Group Holdings, Ltd., Tokyo 130-8602 (JP); Asahi Breweries, Ltd., Tokyo 130-8602 (JP)
(72) Inventor: FUJIMURA, Kazuki, Moriya-shi, Ibaraki 302-0106 (JP)
(74) Representative: Hoffmann Eitle
(86) International application number: PCT/JP2020/038002
(87) International publication number: WO 2021/070864

(57) **Abstract**

The present invention provides packaged beverage containing an edible aqueous solution and a hydrophobic droplet containing a hydrophobic aroma component, wherein the aqueous solution and the hydrophobic droplet are separated, and also provides a method for producing a packaged beverage in which an edible aqueous solution and a hydrophobic droplet containing a hydrophobic aroma component are separated, the method including: packing the aqueous solution in a container main body and subsequently adding a hydrophobic liquid composition containing a hydrophobic aroma component, or packing the hydrophobic liquid composition in the container main body and subsequently adding the aqueous solution, and then sealing the container main body.

## Description

### TECHNICAL FIELD

The present invention relates to a packaged beverage prepared by packaging a soft drink or an alcoholic beverage or the like in a container such as a can, a bottle or a plastic bottle or the like, and a method for producing such a packaged beverage.

### BACKGROUND ART

The aromas detected from foodstuffs can be broadly classified into two types: aromas smelled directly from the nose (orthonasal aromas), and aromas that pass from the throat into the nose when the foodstuff is placed in the mouth and swallowed (retronasal aromas). It is thought that retronasal aromas, in particular, contribute to the flavor of food. On the other hand, orthonasal aromas cause the recollection of flavors prior to eating. In other words, both orthonasal aromas and retronasal aromas are very important for foodstuffs.

In the case of soft drinks and alcoholic beverages to which a fruit juice (extract or juice of a fruit) or a fruit, fruit peel or fruit-like flavoring has been added to impart a fruity flavor, the fruit aroma is an important element affecting the palatability of the beverage. However, the majority of the aroma components derived from fruit have high volatility, and even when added to a beverage, tend to be easily lost with the passage of time. Accordingly, for fruity flavored beverages, various refinements have been tested to ensure a stronger fruity aroma upon consumption.

Examples of known flavor enhancers that can be used to impart a citrus flavor to alcoholic beverages include citrus fruits, whole pastes, flavorings, fruit juices, fruit juice concentrates, juicing residues and fruit peels, and/or flavor enhancers containing aroma components purified from dried products or ethanol extracts of the above fruit components (for example, see Patent Document 1). In addition, Patent Document 2 discloses a method in which by adding bornyl acetate in a specific concentration to an alcoholic beverage containing fruit juice, the fruity sensation due to the fruit peel component contained in the fruit juice can be enhanced. Further, Patent Document 3 discloses a method in which by adding a gentio-oligosaccharide to a beverage containing a high-intensity sweetener and having either a low fruit juice content or containing no fruit juice, the fruity sensation can be enhanced.

### PRIOR ART LITERATURE

### Patent Documents

Patent Document 1: Japanese Unexamined Patent Application, First Publication No. 2010-41935
Patent Document 2: Japanese Unexamined Patent Application, First Publication No. 2017-131134
Patent Document 3: Japanese Unexamined Patent Application, First Publication No. 2011-206030

### SUMMARY OF INVENTION

### Problems to be Solved by the Invention

The present invention has the objects of providing a packaged beverage having an enhanced aroma from a hydrophobic aroma component that is sensed upon package opening and beverage consumption, and a method for producing this packaged beverage.

### Means for Solving the Problems

As a result of intensive research aimed at achieving the above objects, the inventors of the present invention discovered that instead of dissolving or dispersing a hydrophobic aroma component in the liquid representing the main body of the beverage, but rather incorporating the hydrophobic aroma component in a separated state from the liquid, the aromas sensed upon package opening and beverage consumption could be enhanced, thus enabling them to complete the present invention.

In other words, a packaged beverage according to the present invention and a method for producing this packaged beverage include the following [1] to [20].

[1] A packaged beverage containing an edible aqueous solution and a hydrophobic droplet containing a hydrophobic aroma component, wherein the aqueous solution and the hydrophobic droplet are separated.

[2] The packaged beverage according to [1] above, wherein the hydrophobic droplet exists at the liquid surface of the aqueous solution.

[3] The packaged beverage according to [1] or [2] above, wherein the hydrophobic aroma component is a hydrophobic substance with a boiling point of 260°C or higher.

[4] The packaged beverage according to any one of [1] to [3] above, wherein the density of the hydrophobic droplet is lower than the density of the aqueous solution.

[5] The packaged beverage according to any one of [1] to [4] above, wherein the hydrophobic aroma component is an aroma component of a fruit.

[6] The packaged beverage according to any one of [1] to [5] above, wherein the hydrophobic droplet contains a hydrophobic substance extracted from a plant.

[7] The packaged beverage according to [6] above, wherein the hydrophobic substance extracted from a plant is an essential oil.

[8] The packaged beverage according to [6] or [7] above, wherein the plant is a citrus plant.

[9] The packaged beverage according to any one of [1] to [8] above, wherein the hydrophobic droplet contains a terpene.

[10] The packaged beverage according to [9] above, wherein the terpene contains D-limonene.

[11] The packaged beverage according to [9] or [10] above, wherein the proportion of terpene hydrocarbons in the terpene is at least 80% by mass.

[12] The packaged beverage according to any one of [1] to [11] above, wherein the aqueous solution contains an alcohol.

[13] The packaged beverage according to any one of [1] to [12] above, wherein the aqueous solution contains carbon dioxide gas.

[14] The packaged beverage according to any one of [1] to [13] above, wherein the aqueous solution contains a fruit juice or a fruit.

[15] The packaged beverage according to any one of [1] to [14] above, wherein the aqueous solution contains an emulsifier and a hydrophobic aroma component.

[16] The packaged beverage according to any one of [1] to [15] above, wherein the beverage is packed in a bottle-shaped can, a flexible container or a glass bottle.

[17] A method for producing a packaged beverage in which an edible aqueous solution and a hydrophobic droplet containing a hydrophobic aroma component are separated, the method including:
packing the aqueous solution in a container main body and subsequently adding a hydrophobic liquid composition containing a hydrophobic aroma component, or packing the hydrophobic liquid composition in the container main body and subsequently adding the aqueous solution, and
subsequently sealing the container main body.

[18] A method for producing a packaged beverage in which an edible aqueous solution and a hydrophobic droplet containing a hydrophobic aroma component are separated, the method including:
packing a solution prepared by mixing a hydrophobic liquid composition containing a hydrophobic aroma component with the edible aqueous solution into a container main body, subsequently sealing the container, and then forming a hydrophobic droplet that is separated from the edible aqueous solution inside the container.

[19] The method for producing a packaged beverage according to [17] or [18] above, wherein the area of the opening of the container main body prior to sealing is not more than 70% of the surface area of the liquid surface of the edible aqueous solution packed inside the container main body.

[20] The method for producing a packaged beverage according to [19] above, wherein the container is a bottle-shaped can, a flexible container or a glass bottle.

### Effects of the Invention

A packaged beverage according to the present invention is a packaged beverage containing a hydrophilic aroma component, which exhibits an enhanced aroma from the hydrophobic aroma component that is sensed upon package opening and beverage consumption, and exhibits excellent palatability.

Further, by using a method for producing a packaged beverage according to the present invention, a packaged beverage can be produced having an enhanced aroma that is sensed upon package opening and beverage consumption.

### EMBODIMENTS FOR CARRYING OUT THE INVENTION

Generally, the aroma components contained in beverages such as soft drinks and alcoholic beverages are dissolved or dispersed in the beverage. If the aroma component is distributed unevenly within the beverage, then producing the product within uniform quality becomes difficult. Accordingly, for reasons such as enhancing and maintaining the aroma and rectifying the flavor, the flavorings used in beverages are often treated to facilitate dissolution or dispersion of the aroma component in water. Further, in those cases where a hydrophobic substances such as oils or fats are included in a beverage, separation of the hydrophobic substance is considered undesirable from a quality perspective, and therefore the hydrophobic substance is typically emulsified using an emulsifier or the like, or adsorbed to fruit pulp or the like. Furthermore, if the hydrophobic substance separates during the production process for the beverage, then uniform packaging of the product becomes problematic.

In contrast, the packaged beverage according to the present invention contains an edible aqueous solution (hereafter also referred to as the "base liquid") which forms the main body of the beverage, and a hydrophobic droplet containing a hydrophobic aroma component, wherein the aqueous solution and the hydrophobic droplet are separated from each other. The hydrophobic droplet in the beverage may be either a single droplet or a plurality of droplets. The hydrophobic aroma component that exists in a separated state from the base liquid can be sensed as an aroma more readily than a hydrophobic aroma component that is dissolved or dispersed in the base liquid. For example, in the case where the hydrophobic droplet exists at the liquid surface of the base liquid, the hydrophobic aroma component that volatilizes from the hydrophobic droplet enhances the orthonasal aroma of the beverage, and particularly the orthonasal aroma that is detected upon package opening. Further, when the hydrophobic droplet exists within the base liquid, the duration of the retronasal aroma sensed during consumption can be lengthened. It is surmised that this is because a portion of the hydrophobic aroma component contained in the hydrophobic droplet is retained in the oral cavity even after consumption.

### <Hydrophobic Aroma Component>

There are no particular limitations on the hydrophobic aroma component used in the present invention, provided it is a hydrophobic substance selected from among those substances that cause humans to sense an "odor". A hydrophobic substance is a substance which, when dripped onto water at 25°C, is at least partially incompatible, forming an interface on the water. In other words, hydrophobic substances need not necessarily be totally insoluble in water, and include substances which dissolve partially in water. In the present invention, the hydrophobic substance may be selected appropriately from among the types of hydrophobic aroma components typically included in food and beverages, with due consideration of the flavor and aroma characteristics being targeted.

In order to ensure that the aroma is more easily sensed by humans, the hydrophobic aroma component used in the present invention is preferably a volatile substance that volatilizes readily at normal temperature and pressure. Examples of hydrophobic aroma components that volatilize readily at normal temperature and pressure include hydrophobic aroma components having a boiling point of 260°C or lower.

The hydrophobic aroma component used in the present invention may be selected appropriately in accordance with the targeted flavor for the beverage, but substances widely used in beverages such as components that cause the characteristic aroma of specific plants (characteristic aroma components) are preferred, and characteristic aroma components of fruit and herbs (fragrant grasses) are particularly preferred. These "characteristic aroma components of specific plants" are not necessarily limited to the actual aroma components contained in the plants, and may also include aroma components not contained in the plants, provided they generate the plant characteristic aroma that is recognizable by humans.

Examples of preferred hydrophobic aroma components that may be used favorably in the present invention include the characteristic aroma components of citruses such as lemon, lime, yuzu, shekwasha, sudachi, grapefruit, orange, iyokan, satsuma mandarin, Chinese citron, hassaku orange, and hyuganatsu; soft fruits such as strawberry, peach, melon, grape, apple, pear, nashi pear, and cherry; tropical fruits such as banana, pineapple, mango, and passionfruit; and herbs such as peppermint, sage, thyme, lemongrass, cinnamon, rosemary, chamomile, lavender, rosehip, pepper, and vanilla.

Among the various citruses, the characteristic aroma components of lemon include citral, nerol, geraniol, neryl acetate and geranyl acetate. Citral represents at least half of the oxygen-containing compounds contained in the essential oil derived from lemon. Examples of the characteristic aroma components of grapefruit include octanal, decanal and nootkatone, whereas examples of the characteristic aroma components of yuzu include linalool, thymol, yuzunone (a registered trademark), and methyl N-methylanthranilate. Examples of the characteristic aroma components of orange include octanal, decanal, linalool, geranyl acetate and sinensal.

Among the fruits and herbs other than citruses, examples of the characteristic aroma components of peach include γ-undecalactone. Examples of the characteristic aroma components of grape include methyl anthranilate. Examples of the characteristic aroma components of mint include menthol. Examples of the characteristic aroma components of vanilla include vanillin.

### <Hydrophobic Liquid Composition>

The hydrophobic droplet formed in the packaged beverage according to the present invention is composed of a hydrophobic liquid composition containing a hydrophobic aroma component. The hydrophobic aroma component contained in the hydrophobic liquid composition may be a single component, or may be a combination of two or more components. Further, the hydrophobic aroma component may be a chemically synthesized component or a component that has been extracted from a natural source such as an animal or plant and then purified.

In the present invention, the hydrophobic liquid composition that forms the hydrophobic droplet may be a composition composed solely of the hydrophobic aroma component, or may also include hydrophobic substances other than the hydrophobic aroma component. Examples of these other hydrophobic substances include oils and fats, and hydrophobic substances extracted together with the hydrophobic aroma component into organic solvent extracts from natural products. In order to obtain a more satisfactory aroma enhancement effect, the amount of the hydrophobic aroma component relative to the mass of the entire liquid composition is preferably at least 15% by mass, more preferably at least 30% by mass, even more preferably at least 50% by mass, and still more preferably 80% by mass or greater.

The hydrophobic liquid composition may contain non-volatile components having a comparatively high boiling point. In order to ensure that the included hydrophobic aroma component volatilizes readily and is easily recognized as an aroma, thus yielding a more satisfactory aroma enhancement effect, it is preferable that at least 80% by mass of the constituent components of the hydrophobic liquid composition are components with a boiling point of 260°C or lower.

For example, the hydrophobic aroma components contained in plants are contained in large amounts in the essential oils extracted from the plants. Accordingly, an essential oil or a processed product thereof may be included in the hydrophobic liquid composition that forms the hydrophobic droplet. Examples of processed products of essential oils include essential oil concentrates, and products obtained by removing a portion of the components from an essential oil. Essential oils can be extracted from the flowers, buds, fruit (fruit peel or fruit pulp), foliage, roots, bark, stems or resins of plants, using typical methods such as steam distillation or hot water distillation (direct distillation) methods. Processing of essential oils can be conducted using typical methods such as distillation, crystallization and chemical treatment methods.

Essential oils are generally lighter than water, and are hydrophobic liquid compositions containing terpenes as the main components. Terpenes include terpene hydrocarbons and terpenoids. Terpenoids are oxygen-containing derivatives such as alcohols, aldehydes, ketones and esters derived from terpene hydrocarbons.

For example, by forming a hydrophobic droplet from a hydrophobic liquid composition containing an essential oil extracted from a citrus fruit, a packaged beverage having a favorable citrus aroma can be produced. The characteristic aroma components of citruses are contained in particularly large amounts in the fruit peel of the fruit, and therefore the use of essential oils extracted from fruit peel is particularly preferred.

At least 90% of the essential oil components obtained from citruses are terpene hydrocarbons, and the main component is D-limonene, although the contribution of D-limonene to the aroma is low. The components that are important in providing the characteristic citrus aroma are oxygen-containing compounds (terpenoids) such as aldehydes, alcohols and esters, which only exist in the essential oil at a level of several percent. Accordingly, terpeneless oils and folded oils and the like prepared by removing terpene hydrocarbons such as D-limonene to increase the content of oxygen-containing compounds (terpenoids) such as citral are widely used as flavorings added to foodstuffs. In the packaged beverage according to the present invention, terpeneless oils and folded oils and the like may be incorporated in the hydrophobic liquid composition that forms the hydrophobic droplet.

By removing terpene hydrocarbons from citrus essential oils and increasing the terpenoid content, although the aroma is strengthened, there is a possibility that the naturalness of the aroma may be diminished. In order to enable production of a packaged beverage having an enhanced aroma with a natural citrus aroma, the terpenoid content relative to the total mass of terpenes in the hydrophobic liquid composition that forms the hydrophobic droplet is preferably within a range from 10 to 40% by mass, more preferably from 15 to 40% by mass, even more preferably from 20 to 40% by mass, and still more preferably from 20 to 30% by mass. The terpene hydrocarbon content relative to the total mass of terpenes in the hydrophobic liquid composition is preferably not more than 90% by mass, and more preferably 85% by mass or less. Further, the D-limonene content relative to the total mass of terpenes in the hydrophobic liquid composition is preferably within a range from 40 to 60% by mass, and more preferably from 50 to 60% by mass. Furthermore, the D-limonene content relative to the mass of terpene hydrocarbons in the hydrophobic liquid composition is preferably within a range from 50 to 80% by mass, and more preferably from 60 to 75% by mass.

The hydrophobic liquid composition may also contain other components besides the hydrophobic aroma component, provided the effects of the present invention are not impaired. Examples of these other components include oil-soluble solvents, and substances that inhibit degradation of the hydrophobic aroma component. For example, the hydrophobic liquid composition may contain an oil-soluble flavoring prepared by dissolving the hydrophobic aroma component in a liquid hydrophobic solvent such as a liquid oil or the like. Further, an essential oil or processed product thereof and an oil-soluble flavoring may both be included in the hydrophobic liquid composition.

In those cases where the density of the hydrophobic liquid composition is less than the density of the base liquid, the hydrophobic droplet formed from the hydrophobic liquid composition is positioned on the liquid surface of the base liquid of the packaged beverage. In packaged beverages, the opening of the container is typically located on the side of the liquid surface (the upper surface) of the base liquid packed inside the main body of the container. In other words, a hydrophobic droplet having a lower density than the base liquid will float on the liquid surface of the base liquid located closest to the opening of the container, and the hydrophobic aroma component that has volatilized from the hydrophobic droplet will be incorporated in the space near the container opening. As a result, the orthonasal aroma is sensed strongly when the container is opened.

The density of the hydrophobic liquid composition may also be equal to or higher than the density of the base liquid. In such cases, the hydrophobic droplet formed from the hydrophobic liquid composition may sometimes be located at the liquid surface of the base liquid, but may sometimes be located within the base liquid.

The amount of the hydrophobic liquid composition added to the base liquid may be determined as appropriate so as to achieve an amount of the hydrophobic aroma component that is suitable for the aroma and flavor intensity and balance being sought. In the packaged beverage according to the present invention, because the hydrophobic aroma component is included in the form of a hydrophobic droplet that is separated from the base liquid, the aroma of the hydrophobic aroma component is sensed more strongly than conventional packaged beverages containing a similar amount of the hydrophobic aroma component within the beverage, but having that hydrophobic aroma component dispersed uniformly through the entire beverage. For example, a satisfactory aroma enhancement effect can be expected by using an amount of the hydrophobic liquid composition relative to the total volume of the beverage (the combined volume of the base liquid and the hydrophobic liquid composition) that is preferably at least 0.1 g/L, and more preferably 0.2 g/L or greater. On the other hand, if the amount of the hydrophobic liquid composition is too large, then the product becomes oily and not particularly desirable as a beverage. By ensuring that the amount of the hydrophobic liquid composition relative to the total volume of the beverage is preferably not more than 1.0 g/L, and even more preferably 0.8 g/L or less, an aroma enhancement effect can be obtained while maintaining a favorable in-mouth sensation for the beverage.

In those cases where the base liquid is a packaged beverage containing alcohol, by including the hydrophobic droplet containing the hydrophobic aroma component in a separate state from the base liquid, an alcoholic sensation suppression effect is also obtained. Although the reason this effect is obtained is not entirely clear, it is surmised that the hydrophobic droplet containing the hydrophobic aroma component causes a lengthening of the persistence of the retronasal aroma, resulting in a masking of the alcoholic sensation detected during consumption. This alcoholic sensation suppression effect is particularly strong when the hydrophobic aroma component contained in the hydrophobic droplet has the characteristic aroma of a citrus fruit.

In those cases where the base liquid is a packaged beverage containing carbon dioxide gas, depending on the type of hydrophobic aroma component contained in the hydrophobic droplet, the carbonation sensation may sometimes be enhanced in packaged beverages where the hydrophobic droplet is in a separate state from the base liquid. Examples of hydrophobic aroma components that yield an enhanced carbonation sensation when incorporated in the hydrophobic droplet include aroma components of the characteristic aromas of lemon, lime and grapefruit.

### <Base Liquid>

The base liquid of the packaged beverage according to the present invention is an edible aqueous solution that forms the main body of the beverage. Various beverages containing water can be used without modification as this base liquid. The base liquid may be a non-alcoholic beverage or an alcoholic beverage. Further, the base liquid may be a non-carbonated beverage containing no carbon dioxide, or a carbonated beverage containing carbon dioxide. Further, the base liquid may be a beverage produced via a fermentation step, or a beverage produced without conducting a fermentation step.

The base liquid of the packaged beverage according to the present invention may contain a solid such as a fruit pulp or jelly, provided the overall liquid exists in a fluid state. Further, any liquid containing water as a component may be used as the base liquid, and examples include water, liquors, and fruit juices.

The base liquid can be produced, for example, by mixing other components with the raw material water, and then injecting carbon dioxide gas under pressure if required. Examples of the other components include liquors, carbonated water, fruit, vegetables, herbs, sugars, flavorings, other food materials, and food additives and the like, and these components may be selected and used as appropriate. Provided the overall base liquid contains water, raw material water need not necessarily be used, and a liquid containing water such as a carbonated water, liquor, or fruit juice or the like may be used, with the other components then being mixed with this liquid.

Examples of liquors that may be incorporated in the base liquid include raw material alcohol; distilled liquors such as vodka, whiskey, brandy, shochu, rum, spirits and gin; fermented liquors such as wine, cider, beer and sake; and mixed liquors such as liqueurs and vermouth. The liquor incorporated in the base liquid may be a single type of liquor, or a mixture of two or more types. In those cases where the packaged beverage according to the present invention uses a liquid prepared by mixing a liquor and a food material as the base liquid, the resulting beverage is classified under the Japanese Liquor Tax Law (enacted April 1, 2018) as either a liqueur (having an extract component of at least 2 percent) or a spirit (having an extract component of less than 2 percent).

The alcohol content (volumetric concentration of ethanol) in the base liquid is not particularly limited, and may be determined appropriately in accordance with the target product quality. For example, the liquor content of the base liquid may be adjusted as appropriate to ensure an alcohol content for the base liquid that is preferably at least 1% by volume, more preferably at least 2% by volume, and more preferably 3% by volume or greater.

There are some components among hydrophobic aroma components that dissolve readily in alcohol. In those cases where the hydrophobic aroma component contained in the hydrophobic droplet is an aroma component that dissolves readily in alcohol, and the alcohol concentration of the base liquid is high, a portion of the hydrophobic aroma component in the hydrophobic droplet may sometimes dissolved in the base liquid. Accordingly, the alcohol content of the base liquid is preferably adjusted so that the base liquid and the hydrophobic droplet are able to separate without impairing the flavor balance of the beverage. For example, the liquor content of the base liquid may be adjusted so that the alcohol content is preferably not more than 15% by volume, more preferably not more than 10% by volume, and even more preferably 8% by volume or lower.

In order to ensure that an adequate amount of the hydrophobic droplet containing the hydrophobic aroma component remains in a separate state from the base liquid even after a portion of the hydrophobic aroma component in the hydrophobic droplet has dissolved in the base liquid, an amount of the hydrophobic liquid composition that takes into account this lost portion is preferably mixed with the base liquid. Specifically, the concentration of the hydrophobic aroma component in the hydrophobic liquid composition and the amount of the hydrophobic liquid composition mixed with the base liquid are preferably adjusted appropriately so that the concentration of the hydrophobic aroma component relative to the total volume of the beverage following mixing of the hydrophobic liquid composition with the base liquid, namely, ([amount of the hydrophobic aroma component contained in the base liquid prior to mixing of the hydrophobic liquid composition] + [amount of the hydrophobic aroma component contained in the hydrophobic liquid composition mixed with the base liquid]) / ([amount of the base liquid] + [amount of the hydrophobic liquid composition]), is greater than the degree of dissolution of the hydrophobic aroma component in the base liquid at 25°C.

There are no particular limitations on the types of fruit, vegetables and herbs that may be incorporated in the base liquid, and those fruits and the like typically used in beverages may be used as appropriate. For example, in the case of fruit and herbs, those fruit and herbs described above as giving rise to hydrophobic aroma components may be used. Further, examples of vegetables that may be used include tomato, carrot, spinach, cabbage, brussels sprouts, broccoli, cauliflower, celery, lettuce, parsley, cress, kale, soybeans, beet, red capsicum, pumpkin, and komatsuna. The fruit, vegetables and herbs incorporated in the base liquid may be a of a single type, or a mixture of two or more types.

A shredded form of the fruit or the like may be added, as is, to the base liquid, or an extracted juice such as a fruit juice or vegetable juice may be added as a raw material. Fruit juice is defined by the Japanese Agricultural Standards for fruit beverages in Japan, or by the Codex standards for fruit juice and nectar internationally (CODEX STAN 247-2005). Concentrated fruit juices and reduced fruit juices and the like may also be used as a raw material in the preparation of the base liquid, and clarified fruit juices prepared by removing a portion of the insoluble solid fraction may also be used.

Fruit extracts and vegetable extracts may also be added to the base liquid as a raw material. Particularly in those cases where the hydrophobic aroma component contained in the hydrophobic droplet includes the characteristic aroma components of a fruit or herb, a fruit juice or extract of the same type as the hydrophobic aroma component is preferably also incorporated in the base liquid.

Fruit extracts and vegetable extracts are produced by using water or alcohol to extract the components contained in the fruit or vegetable from a shredded form of the fruit or vegetable. These extracts are produced, for example, by methods that employ hot water extraction, and methods in which the fruit components are eluted using a liquefied gas, and the liquefied gas is then vaporized to isolate and recover the fruit components.

The term sugars is a generic term for monosaccharides and disaccharides, and includes normal sugar (sucrose), grape sugar (glucose), fruit sugar (fructose), and isomerized sugar and the like. By incorporating these types of sugars in the base liquid, the beverage can be imparted with sweetness and body and the like. The sugars incorporated in the base liquid may be a single type of sugar, or a mixture of two or more types.

Moreover, flavorings and other food materials may also be incorporated in the base liquid. Examples of these other food materials include dietary fiber, yeast extracts, and proteins or degradation products thereof. Among these materials, water-soluble dietary fiber is widely used for imparting body and other functions to beverages. Water-soluble dietary fiber means carbohydrates which dissolve in water but are not digested or are only sparingly digested by human digestive enzymes. Examples of this type of water-soluble dietary fiber include soybean dietary fiber, polydextrose, digestion-resistant dextrin, galactomannan, inulin, guar gum hydrolysate, pectin, and gum arabic. A single type of these water-soluble dietary fibers may be used alone, or a mixture of two or more types may be used.

Examples of food additives that may be included in the base liquid include those materials permissible for use under the laws of the country concerned, and provided that requirement is met, there are no particular limitations. Examples of additives that may be added as required include preservatives and antioxidants and the like which are used for maintaining food quality, colorants, flavorings, sweeteners, acidifiers, and emulsifiers and the like which are used for the purpose of improving the food palatability, pH modifiers, antifoaming agents, and foaming agents and the like which may be required for the production or processing of the foodstuff, and nutrient enrichments which are used for supplementing or improving the nutrient composition.

A simple description of some food additives is provided below.

Colorants are food additives used for improving the coloring of foodstuffs, and can be broadly classified into chemically synthesized colorants and natural colorants. Under the Japanese Food Sanitation Law, colorants are classified as specified additives, existing additives, and general food and beverage additives. Caramel coloring which colors foodstuffs a brown color is widely used as a colorant. A secondary effect of caramel coloring is that it is also capable of imparting a roasted sensation and richness to beverages.

Flavorings are used for imparting an aroma to a foodstuff or for strengthening an aroma. Flavorings for foodstuffs include natural flavorings extracted from natural products, and synthetic flavorings that are synthesized chemically. Under the Japanese Food Sanitation Law, natural flavorings are defined as "additives which are substances or mixtures of substances obtained from plants or animals that are used for flavoring food", and the names of animals and plants that may be used are disclosed in a "natural flavorings origin list". Further, almost all synthetic flavorings are chemically synthesized compounds that have the same composition as compounds that already exist in food, and these flavorings are specified in "Table 1 of the Enforcement Regulations of the Food Sanitation Law".

Food flavorings are seldom used individually, and mixed products containing a combination of a plurality of flavoring compounds are typically used. Possible forms for these flavoring products include water-soluble flavorings, oil-soluble flavorings, emulsified flavorings, and powdered flavorings and the like. Water-soluble flavorings are obtained by extracting a flavoring base by dissolution in a water-soluble solvent such as aqueous alcohol or propylene glycol. Oil-soluble flavorings are obtained by dissolving a flavoring base in a plant-based oil or the like. Emulsified flavorings are obtained by using an emulsifier or stabilizer or the like to emulsify a flavoring base in water to produce fine particulate state. These emulsified flavorings can also impart cloudiness to a beverage. Powdered flavorings are obtained by emulsifying a flavoring base together with an excipient such as dextrin, natural gums, sugars, or starch or the like and then powdering the resulting product by spray drying, or by adhering the flavoring base to lactose or the like. Typically, water-soluble flavorings and emulsified flavorings are used in beverages.

Particularly in those cases where the hydrophobic aroma component contained in the hydrophobic droplet includes the characteristic aroma components of a fruit or herb, it is preferable that a flavoring of the same type of fruit or the like as the hydrophobic aroma component is incorporated in the base liquid.

Sweeteners are used for imparting sweetness to foodstuffs, but the previously mentioned sugars and a portion of low-sweetness substances (such as starch syrup, erythritol, maltitol and lactitol) are classified as foods rather than as food additives. Examples of low-sweetness substances that are classified as food additives include L-arabinose, D-xylose, trehalose, D-sorbitol, xylitol and mannitol, whereas examples of high-sweetness substances include aspartame, neotame, acesulfame potassium, saccharins, sucralose, disodium glycyrrhizinate, stevia extract, glycyrrhiza extract, and thaumatin. In the Japanese Food Sanitation Law, sweeteners are classified as specified additives, existing additives or general food additives.

Substances such as aspartame, acesulfame potassium and sucralose having similar sweetness characteristics to the sugars (sucrose, glucose, fructose) conventionally used in beverages are also often used in beverages. One or more of these sweeteners widely used in beverages is preferably also used in the base liquid in the present invention.

Acidifiers are used for imparting acidity to a foodstuff or for enhancing the acidity. Examples of acidifiers include organic acids such as citric acid and lactic acid and salts thereof, and inorganic acids such as phosphoric acid and carbon dioxide. By using a combination of an organic acid and a salt thereof, a specific pH can be more readily maintained through a buffering effect.

Substances collectively listed as acidifiers in Japan include the specified additives adipic acid, citric acid, trisodium citrate, glucono delta lactone, gluconic acid, potassium gluconate, sodium gluconate, succinic acid, sodium succinate, disodium succinate, sodium acetate, DL-tartaric acid, L-tartaric acid, sodium DL-tartrate, sodium L-tartrate, carbon dioxide, lactic acid, sodium lactate, glacial acetic acid, fumaric acid, sodium fumarate, DL-malic acid, sodium DL-malate and phosphoric acid, and the existing additives itaconic acid, phytic acid and α-ketoglutaric acid.

The acidifiers used in beverages are typically selected in accordance with the flavor of the beverage. For example, in the case of citrus-flavored beverages, citric acid and citrates which exist in large amounts in citruses are often selected, in the case of grape-flavored beverages, tartaric acid and tartrates which exist in large amounts in grapes are often selected, and in the case of apple-flavored beverages, malic acid and malates which exist in large amounts in apples are often selected.

Further, the pH of the beverage may be adjusted for purposes such as microbiological control and suppression of aroma component degradation. Generally, the lower the pH of a beverage, the less likely microorganisms are to proliferate. On the other hand, if the pH is too low, the acidity may become too strong. Further, among aroma components, there are some substances that are prone to degradation if the pH falls too low. In terms of achieving an acidity strength suitable for a beverage and suppressing degradation of the aroma components, the pH of the base liquid is preferably at least 2.0, more preferably at least 2.5, and even more preferably 3.0 or higher. Furthermore, considering factors such as the suppression of microorganism growth and the sterile condition strength, the pH of the base liquid, in those cases where the base liquid contains no alcohol, is preferably not higher than 5.0, more preferably not higher than 4.0, and even more preferably less than 4.0, and in those cases where the base liquid contains alcohol, is preferably not higher than 6.5, and more preferably 5.0 or lower.

For example, in those cases where the hydrophobic droplet contains a hydrophobic aroma component that becomes more prone to degradation as the pH falls, the pH of the base liquid is preferably kept comparatively high. For example, citral becomes more prone to degradation as the pH falls, and therefore in those cases where the packaged beverage according to the present invention is a lemon-flavored beverage containing citral, the pH of the base liquid is preferably at least 3.0, and more preferably 3.5 or higher, and in terms of ensuring satisfactory suppression on microorganism growth and achieving favorable acidity for a lemon flavor, the pH is preferably within a range from 3.0 to 4.0, and particularly preferably within a range from 3.5 to 3.7.

Emulsifiers are used in foodstuffs for the purposes of emulsification, dispersion, diffusion, washing, foaming, defoaming, and mold release and the like, and are often used in beverages for dispersing (emulsifying) oils in the liquid. For example, emulsifiers can be used for dispersing hydrophobic components uniformly in water, and suppressing the separation of oil and fat components derived from the raw materials.

The food materials and food additives described above are merely examples, and substances that may be included in the packaged beverage according to the present invention are not limited to the materials and additives mentioned above. The types and amounts of food materials and food additives used may be selected and adjusted appropriately in accordance with the target beverage.

The base liquid is prepared by uniformly mixing all of the raw materials. In those cases where the raw materials include a hydrophobic component, a suitable emulsifier or the like may be used to perform an emulsification treatment to achieve a uniform liquid. Further, in those cases where the base liquid contains insoluble solid matter such as fruit pulp or the like, sufficient agitation is conducted to ensure a uniform liquid. The emulsification and agitation treatments may be conducted using a homogenizer or stirring device or the like typically used in the production of beverages. For example, in those cases where the base liquid contains a hydrophobic aroma component, in order to ensure uniform dispersion of the hydrophobic aroma component within the base liquid, it is preferable that an emulsifier is also mixed with the base liquid, and even more preferable that a suitable emulsification treatment is conducted.

In those cases where the base liquid does not contain any hydrophobic components or insoluble solid matter, the uniformity of the base liquid can be stably maintained more easily than cases where the base liquid does include hydrophobic components or insoluble solid matter. A uniform base liquid enables the hydrophobic droplet to separate more stably from the base liquid, and is consequently preferred.

Moreover, carbon dioxide may be injected into the base liquid under pressure to form a carbonated beverage. The gas volume used in this case may be adjusted appropriately depending on the desired purpose, but is limited by factors such as the pressure resistance of the container and the production conditions. For example, in those cases where heat sterilization is conducted during the production process, the pressure inside the container during heating must be no higher than the pressure resistance of the container, and therefore the gas volume must be limited compared with the volume that may be used when heat sterilization is not conducted.

Because carbon dioxide gas has a bacteriostatic action, in those cases where the carbon dioxide gas pressure inside the container is at least 98 kPa at 20°C, and the beverage does not contain tissue components of plants or animals such as fruit juice or fruit pulp or milk or the like, heat sterilization is unnecessary, and the gas volume can be increased.

In those cases where insoluble matter develops in the prepared base liquid, the base liquid is preferably subjected to a treatment such as filtration to remove the insoluble matter. There are no particular limitations on the insoluble matter removal treatment, and the types of methods typically used in this technical field such as filtration methods and centrifugal separation methods may be used. In the present invention, filtration removal of insoluble matter is preferred, and removal by diatomaceous earth filtration is more preferred.

### <Container>

The packaged beverage according to the present invention is obtained by packing the base liquid and the hydrophobic liquid composition in a container, namely, by filling and sealing the container. There are no particular limitations on the types of containers that can be used, and examples include two-piece beverage cans, three-piece beverage cans, bottle-shaped cans, flexible containers, and glass bottles. Examples of flexible containers include containers produced by molding a flexible resin such as PE (polyethylene), PP (polypropylene), EVOH (ethylene-vinyl alcohol copolymer) or PET (polyethylene terephthalate) into a bottle shape. The flexible container may be formed from either a single resin layer or a plurality of resin layers.

In those cases where the packaged beverage according to the present invention is a carbonated beverage, a container having high pressure resistance is used. Among currently used aluminum (alloy) two-piece beverage cans and aluminum (alloy) bottle-shaped cans, the manufacturer-guaranteed pressure resistance is about 686 kPa for the most highly pressure-resistant containers, but the actual pressure resistance is not more than about 3.2 gas volume in those cases where heat sterilization is required, and not more than about 3.8 gas volume in those cases where heat sterilization is unnecessary.

Some hydrophobic substances, including hydrophobic aroma components, dissolve or degrade resins. Accordingly, in those cases where a flexible container or a container that is partially formed from a resin is used, it is preferable to use a resin that is unaffected by dissolution or degradation by the hydrophobic substance contained in the hydrophobic droplet in the beverage. For example, the sealing compounds used in two-piece beverage cans and three-piece beverage cans contain a resin as the main component, and the liner of the cap of a bottle-shaped can also contains a resin.

For example, essential oil components obtained from citruses contain mainly D-limonene, and in order to impart a beverage with a natural citrus aroma, it is necessary to include some D-limonene in the hydrophobic substance. On the other hand, there is a possibility that D-limonene may dissolve sealing compounds and cap liners that contain styrene-butadiene rubbers or the like as the main component. Accordingly, containers that are to be filled with a beverage containing a hydrophobic droplet that contains D-limonene are preferably containers produced using a resin with superior D-limonene resistance such as fluoro rubber, nitrile rubber (NBR), or linear low-density polyethylene (L-LDPE). Examples of such containers include two-piece beverage cans and three-piece beverage cans that use a sealing compound containing a fluoro rubber or nitrile rubber (NBR) or the like as the main component, and bottle-shaped cans that use L-LDPE as the cap liner.

### <Packaged Beverage>

The packaged beverage according to the present invention contains the hydrophobic aroma component encapsulated in a hydrophobic droplet that is separated from the base liquid. The existence of the hydrophobic droplet can be confirmed by inspecting the beverage under a microscope. Further, in those cases where the density of the hydrophobic droplet is lower than that of the base liquid, because the hydrophobic droplet floats on the liquid surface of the beverage, the hydrophobic droplet can sometimes be confirmed visually.

Further, in the packaged beverage according to the present invention, the hydrophobic droplet preferably exists in a restricted region within the beverage. By concentrating the hydrophobic droplet in a specific region, the hydrophobic aroma component contained in the hydrophobic droplet is sensed more strongly upon package opening and beverage consumption, yielding a more superior aroma enhancement effect.

For example, when the density of the hydrophobic droplet is lower than that of the base liquid, the hydrophobic droplet exists essentially at the liquid surface of the beverage. As a result, the concentration of the hydrophobic aroma component contained in the hydrophobic droplet is much higher at the liquid surface than at any other region. For example, the concentration of the hydrophobic aroma component in the fraction that represents the uppermost (liquid surface side) 1/10th in the height direction of the packaged beverage (for example, the uppermost 40 mL of the beverage from the liquid surface in the case of 400 mL of beverage) is at least 10 times higher, and preferably at least 100 times higher, than the concentration in other fractions, such as the lowermost fraction in the height direction.

The concentration of the various aroma components in various beverages can be quantified, for example, by GC-MS (gas chromatography-mass spectrometry).

### <Method for Producing Packaged Beverage>

The packaged beverage according to the present invention can be produced in the same manner as typical packaged beverages, with the exception of mixing the hydrophobic liquid composition with the base liquid in a manner that ensures formation of the hydrophobic droplet.

In the following description, a liquid that represents an incomplete form of the base liquid of the target beverage is referred to as a "base liquid intermediate". Examples of base liquid intermediates include liquids that still do not contain a portion of the raw materials, and liquids that contain components or the like that require removal in substrate steps.

Packaged beverage products are generally produced via steps such as a syrup preparation step of preparing a concentrated syrup, a dilution step of mixing the concentrated syrup with water, and a filling step of filling a container with the beverage. In the case of a carbonated beverage, a gas introduction step of introducing carbon dioxide gas under pressure may be provided as necessary between the dilution step and the filling step. In those cases where the packaged beverage according to the present invention is produced without a gas introduction step, then for example, the concentrated syrup corresponds with a base liquid intermediate, and the dilute liquid obtained by mixing the concentrated syrup with water corresponds with the base liquid. In those cases where the packaged beverage according to the present invention is produced with a gas introduction step, then for example, the concentrated syrup and the dilute liquid thereof both correspond as base liquid intermediates, and the liquid obtained by introducing carbon dioxide gas into the dilute liquid of the concentrate syrup corresponds with the base liquid.

The hydrophobic liquid composition is mixed with the base liquid intermediate or the bas liquid at some time between completion of the syrup preparation step and filling of the container. There are no particular limitations, provided that when the container is finally opened for consumption, at least a portion of the hydrophobic liquid composition added as a raw material exists in the form of a hydrophobic droplet that is separated from the base liquid.

The base liquid and the hydrophobic liquid composition are preferably prepared separately. Even in those cases where the fruit juice from a fruit is used in the base liquid and the hydrophobic aroma component obtained from the same type of fruit is used in the hydrophobic liquid composition, the fruit juice and the hydrophobic aroma component need not necessarily be prepared from the same fruit, and preparing the fruit juice and the hydrophobic substance from different fruit samples may be advantageous in terms of achieving industrial mass production.

For example, following filling of the container main body with the base liquid, the hydrophobic liquid composition may be added. By adding the base liquid and the hydrophobic liquid composition separately to the container, the hydrophobic liquid composition can be introduced as a hydrophobic droplet that is separated from the base liquid, and by subsequently sealing the container main body with a lid, the packaged beverage according to the present invention can be produced. The entire hydrophobic liquid composition may be added in one batch, or added in a plurality of batches. Further, the hydrophobic liquid composition may be added to the container main body from a single injection port, or a small amount of the hydrophobic liquid composition may be added from each of a plurality of injection ports.

In terms of the configuration employed when adding the hydrophobic liquid composition to the container main body after filling with the base liquid, the surface area of the opening of the container main body prior to sealing is preferably smaller than the surface area of the liquid surface of the base liquid inside the container main body, and is more preferably not more than 70%, even more preferably not more than 50%, and still more preferably not more than 30% of the surface area of the liquid surface of the base liquid. By ensuring that the surface area of the opening of the container main body prior to sealing is smaller than the surface area of the liquid surface of the base liquid, the hydrophobic liquid composition can be prevented from rebounding off the liquid surface of the base liquid and spilling outside the container when the hydrophobic liquid composition is added. Examples of containers in which the surface area of the opening of the container main body prior to sealing is relatively small include bottle-shaped containers such as bottle-shaped cans, flexible containers and glass bottles.

The packaged beverage according to the present invention can also be produced by adding the hydrophobic liquid composition to the container main body, subsequently adding the base liquid, and then sealing the container main body with a lid. By adding the hydrophobic liquid composition first, the hydrophobic liquid composition can be prevented from rebounding and spilling outside the container upon addition to the container main body regardless of the size of the surface area of the opening of the container main body prior to sealing.

The packaged beverage according to the present invention may also be produced by first preparing a solution containing the hydrophobic liquid composition dispersed in the base liquid, and then using that solution to fill the container main body. After sealing of the filled container main body with a lid, the packaged beverage according to the present invention can be produced inside the container by forming a hydrophobic droplet that separates from the base liquid. The solution containing the hydrophobic liquid composition dispersed in the base liquid may be prepared by mixing and dispersing the hydrophobic liquid composition in the base liquid, or may be prepared by mixing and dispersing the hydrophobic liquid composition in the base liquid intermediate, and then mixing the remaining raw materials with the thus obtained dispersion.

In those cases where the packaged beverage is an alcoholic beverage and the base liquid contains alcohol, the alcohol content of the concentrated syrup may sometimes be 20% by mass or higher. Accordingly, in those cases where the base liquid contains alcohol, it is preferable that the hydrophobic liquid composition is mixed with and dispersed in the base liquid obtained by diluting the concentrated syrup with water.

The base liquid which contains mainly water and the hydrophobic liquid composition are extremely incompatible. Accordingly, when mixing the base liquid and the hydrophobic liquid composition, by appropriate selection of the dispersant or emulsifier, and adjustment of the stirring intensity, the hydrophobic liquid composition can be dispersed in the base liquid for a certain period following the mixing treatment, but then subsequently separate from the base liquid to form the hydrophobic droplet. The dispersion obtained by mixing the base liquid and the hydrophobic liquid composition maintains the state of dispersion of the hydrophobic liquid composition in the base liquid for at least the period from completion of the mixing treatment until filling of the container main body, and preferably a period of at least 24 hours, more preferably a period of 24 to 240 hours, even more preferably a period of 24 to 120 hours, and still more preferably a period of 48 to 120 hours, from completion of the mixing treatment, and then subsequently forms the hydrophobic droplet.

Separation of the hydrophobic liquid composition from the dispersion containing the hydrophobic liquid composition dispersed in the base liquid can be achieved not only by leaving the dispersion to stand for at least a certain period of time, but also by conducting any of various treatments such as a change in temperature, addition of a salt, application of a centrifugal force or shearing force, application of a voltage, addition of an acid or base, or addition of a demulsifier. In those cases where the packaged beverage is subjected to a heat sterilization treatment, the heating of the heat sterilization treatment may also be used to separate the base liquid and the hydrophobic liquid composition. The separation treatment for separating the hydrophobic liquid composition from the base liquid is preferably conducted 24 to 240 hours, and more preferably 48 to 120 hours after dispersion of the hydrophobic liquid composition in the base liquid.

The dispersion containing the hydrophobic liquid composition dispersed in the base liquid need not necessarily be uniform, provided that the dispersion is sufficient that when equal amounts of the dispersion are used to fill a plurality of container main bodies, the amounts of the base liquid and the hydrophobic liquid composition in the various container main bodies are substantially constant (±20% by mass).

In those cases where the base liquid contains alcohol, addition of alcohol can also be used to cause separation of the hydrophobic liquid composition from the dispersion containing the hydrophobic liquid composition dispersed in the aqueous medium. For example, a base liquid intermediate is first prepared prior to mixing with the liquor used as a raw material, and the hydrophobic liquid composition may then be mixed with and dispersed in this base liquid intermediate. Following filling of the container main body with the thus obtained dispersion, the liquor is added to the container main body. The addition of the liquor causes the dispersed state to become unstable, and the hydrophobic liquid composition separates and forms the hydrophobic droplet. By subsequently sealing the container main body, the packaged beverage according to the present invention can be produced. The base liquid intermediate in which the hydrophobic liquid composition is dispersed may be a mixture of all of the raw materials besides the liquor, or may be a liquid obtained prior to mixing a number of raw materials other than the liquor, in which case the remaining raw materials may be added together with the liquor to prepare the base liquid of the target formulation.

In those cases where a dispersant or an emulsifier is used as the method for dispersing the hydrophobic liquid composition in the base liquid or the base liquid intermediate, the final packaged beverage will contain the dispersant or emulsifier. Furthermore, there are no particular limitations on any production steps other than those described above.

Further, in order to suppress degradation of the hydrophobic aroma component, the amount of oxygen that exists in the empty space portion within the packaged beverage is preferably reduced, and it is preferable that this empty space portion within the packaged beverage is filled with an inert gas such as nitrogen or carbon dioxide.

Furthermore, in Japan, in those cases where a beverage contains the tissue component of a plant or animal, sterilization or bacterial elimination is required under the Food Sanitation Law. In the case of packaged beverages, heat sterilization is usually conducted after the beverage is sealed inside the container. Similarly, in the present invention, a heat sterilization treatment may be conducted as required during the production process for the packaged beverage. The heat sterilization treatment may be conducted prior to filling of the container, or after filling of the container. The sterilization may be conducted using typical methods such as UHT (ultra-high temperature) sterilization treatments, pasteurization sterilization treatments and retort sterilization treatments.

### EXAMPLES

The present invention is described below in further detail using a series of examples, but the present invention is not limited to the following examples.

### [Examples 1 to 10, Comparative Examples 1 to 7]

Packaged beverages were produced by using various methods to incorporate a hydrophobic aroma component extracted from lemon peel into carbonated alcoholic beverages, and the effect of the hydrophobic aroma component on the beverage aroma was investigated.

First, 6.1% by mass of raw material alcohol (ethanol concentration: 95.3% by volume), 2.1% by mass of sucrose, 0.3% by mass of citric anhydride, 0.2% by mass of sodium citrate and water were mixed with a lemon extract (ethanol concentration: 38.0% by volume), an emulsifier (lecithin), lemon pulp, lemon flavoring (ethanol concentration: 51.4% by volume), a lemon juice I and a lemon juice II so as to achieve the amounts shown in Tables 1 to 3, thus completing preparation of a series of base liquids. A lemon oil I, a lemon oil II, a lemon oil III and a lemon oil IV were then mixed with the prepared base liquids in amounts shown in Tables 1 to 3, thus obtaining beverages of Examples 1 to 10 and Comparative Examples 1 to 7.

Carbon dioxide gas was injected under pressure into each of the beverages to achieve a gas volume of 3.0 GV (volume/volume). These beverages were then placed in aluminum (alloy) two-piece beverage cans, thus producing a series of packaged beverages.

The lemon oil 1 was a hydrophobic liquid composition prepared by mixing a hydrophobic composition (single oil) extracted from lemon peel, and a hydrophobic composition (folded oil) obtained by removing a portion of the terpene hydrocarbons from this single oil to increase the terpenoid content. Of the terpenes contained in the lemon oil I, the terpene hydrocarbon content was 84.0% by mass, and of those terpene hydrocarbons, the D-limonene content was 68.2% by mass.

The lemon oil II was a folded oil prepared by removing a portion of the terpene hydrocarbons from a single oil extracted from lemon peel to increase the terpenoid content. Of the terpenes contained in the lemon oil II, the terpene hydrocarbon content was 23.7% by mass, and among those terpene hydrocarbons, the D-limonene content was 10.5% by mass.

The lemon oil III was a hydrophobic liquid composition prepared by mixing a medium-chain fatty acid oil and the lemon oil II in a weight ratio of 75:15.

The lemon oil IV was a single oil extracted from lemon peel. Of the terpenes contained in the lemon oil IV, the terpene hydrocarbon content was 94.3% by mass, and among those terpene hydrocarbons, the D-limonene content was 66.4% by mass.

The lemon juice I was a juice extracted solely from the fruit flesh of raw lemon fruit, whereas the lemon juice II was a juice extracted from both the fruit flesh and the peel.

In the beverages of Examples 1 to 10, small oily droplets were observed floating on the surface of the beverage. On the other hand, in Comparative Examples 1 and 2, the lemon oil was dispersed by the action of the emulsifier, and the existence of oily droplets could not be confirmed. Further, in the beverage of Comparative Example 3, the lemon oil adsorbed to the pulp and did not separate, meaning oily droplets could not be confirmed. Although the lemon juice II contained terpenes derived from the fruit peel, in the beverage of Comparative Example 7, oily droplets could not be confirmed. It is surmised that this is because in the beverage of Comparative Example 7, the terpenes were either dissolved in the alcohol or adsorbed to the pulp in the beverage.

For each of these packaged beverages, sensory evaluations were conducted for "intensity of aroma upon opening (orthonasal aroma)", "intensity of aroma upon consumption (retronasal aroma)", "naturalness of aroma and flavor", "carbonation sensation", "alcoholic sensation" and "persistence time of aroma". The sensory evaluations were conducted by three trained panelists, with the consensus value of all the panelists being used as the evaluation score for the target evaluation.

For each of the "intensity of aroma upon opening (orthonasal aroma)", the "intensity of aroma upon consumption (retronasal aroma)", the "carbonation sensation" and the "alcoholic sensation", the intensity was evaluated using a 5-grade scale (grade 1: weak, grade 2: slightly weak, grade 3: typical, grade 4: slightly strong, grade 5: strong).

The "naturalness of aroma and flavor" was evaluated using a 5-grade scale (grade 1: unnatural, grade 2: slightly unnatural, grade 3: typical, grade 4: natural, grade 5: very natural).

The "persistence time of aroma" was evaluated by investigating the time elapsed (seconds) from the time of consumption until the time when it was confirmed that the lemon aroma had disappeared.

**[Table 1]**

| | Example 1 | Example 2 | Example 3 | Example 4 | Example 5 | Example 6 |
|---|---|---|---|---|---|---|
| Lemon extract [g/L] | 0.20 | 0.20 | 0.20 | 0.20 | 0.20 | 0.20 |
| Lemon oil I [g/L] | 0.01 | 0.10 | 0.20 | 0.30 | 0.50 | 1.00 |
| Lemon oil II [g/L] | | | | | | |
| Lemon oil III [g/L] | | | | | | |
| Lemon oil IV [g/L] | | | | | | |
| Emulsifier [g/L] | | | | | | |
| Lemon pulp [g/L] | | | | | | |
| Lemon flavoring [g/L] | | | | | | |
| Lemon juice I [g/L] | | | | | | |
| Lemon juice II [g/L] | | | | | | |
| Intensity of aroma upon opening (orthonasal aroma) | 3 | 4 | 5 | 5 | 5 | 5 |
| Intensity of aroma upon consumption (retronasal aroma) | 2 | 3 | 4 | 4 | 5 | 5 |
| Naturalness of aroma and flavor | 3 | 4 | 5 | 5 | 5 | 5 |
| Carbonation sensation | 3 | 4 | 5 | 5 | 5 | 4 |
| Alcoholic sensation | 4 | 3 | 3 | 2 | 2 | 2 |
| Persistence time of aroma [s] | 0 to 5 | | | 0 to 10 | 0 to 12 | 0 to 15 |

**[Table 2]**

| | Example 7 | Example 8 | Example 9 | Example 10 | Comparative Example 1 | Comparative Example 2 |
|---|---|---|---|---|---|---|
| Lemon extract [g/L] | 0.20 | 0.20 | 0.20 | 0.20 | 0.20 | 0.20 |
| Lemon oil I [g/L] | | | | 0.30 | 0.30 | 1.00 |
| Lemon oil II [g/L] | 0.30 | | | | | |
| Lemon oil III [g/L] | | 0.30 | | | | |
| Lemon oil IV [g/L] | | | 0.30 | | | |
| Emulsifier [g/L] | | | | | 0.10 | 0.10 |
| Lemon pulp [g/L] | | | | | | |
| Lemon flavoring [g/L] | | | | 0.30 | | |
| Lemon juice I [g/L] | | | | | | |
| Lemon juice II [g/L] | | | | | | |
| Intensity of aroma upon opening (orthonasal aroma) | 5 | 3 | 3 | 5 | 2 | 2 |
| Intensity of aroma upon consumption (retronasal aroma) | 5 | 2 | 3 | 5 | 2 | 2 |
| Naturalness of aroma and flavor | 2 | 2 | 4 | 5 | 2 | 1 |
| Carbonation sensation | 5 | 2 | 3 | 5 | 2 | 2 |
| Alcoholic sensation | 2 | 3 | 3 | 2 | 3 | 2 |
| Persistence time of aroma [s] | 0 to 15 | | | 0 to 12 | 0 to 3 | 0 to 5 |

**[Table 3]**

| | Comparative Example 3 | Comparative Example 4 | Comparative Example 5 | Comparative Example 6 | Comparative Example 7 |
|---|---|---|---|---|---|
| Lemon extract [g/L] | 0.20 | 0.20 | 0.20 | | |
| Lemon oil I [g/L] | 0.30 | | | | |
| Lemon oil II [g/L] | | | | | |
| Lemon oil III [g/L] | | | | | |
| Lemon oil IV [g/L] | | | | | |
| Emulsifier [g/L] | | | | | |
| Lemon pulp [g/L] | 30.00 | | | | |
| Lemon flavoring [g/L] | | 0.30 | 1.00 | | |
| Lemon juice I [g/L] | | | | 10.00 | |
| Lemon juice II [g/L] | | | | | 10.00 |
| Intensity of aroma upon opening (orthonasal aroma) | 3 | 3 | 3 | 1 | 3 |
| Intensity of aroma upon consumption (retronasal aroma) | 3 | 3 | 5 | 1 | 3 |
| Naturalness of aroma and flavor | 5 | 2 | 1 | 3 | 5 |
| Carbonation sensation | 2 | 2 | 3 | 2 | 2 |
| Alcoholic sensation | 2 | 4 | 4 | 4 | 3 |
| Persistence time of aroma [s] | 0 to 7 | 0 to 3 | 0 to 4 | 0 to 2 | 0 to 8 |

The results are shown in Tables 1 to 3. As illustrated by the packaged beverages of Examples 1 to 6, in those beverages where the lemon oil I existed at the liquid surface as oily droplets, the orthonasal and the retronasal aroma both strengthened in a lemon oil concentration-dependent manner. The strengthening tendency for the orthonasal aroma was particularly marked. Further, the naturalness of the aroma and flavor also improved and the aroma persistence time also lengthened in a lemon oil concentration-dependent manner. In terms of the effects not related to aroma, the carbonation sensation intensified, but the alcoholic sensation fell as the concentration of the lemon oil increased.

In the case of the beverage of Example 7, which contained the lemon oil II having an increased terpenoid content ratio, both the orthonasal aroma and the retronasal aroma intensified in a similar manner to that observed for Example 4, which contained the same amount of the lemon oil I, but the naturalness of the aroma and flavor deteriorated, and the aroma persistence time lengthened. On the other hand, the strengthening effect on the carbonation sensation and the reduction effect on the alcoholic sensation were similar to those observed for the lemon oil I. In the beverage of Example 10, which included added lemon flavoring to the beverage of Example 4, the retronasal aroma was further intensified, and the aroma persistence time also lengthened slightly.

In the beverage of Example 8, which contained the added lemon oil III having a high content ratio of the medium-chain fatty acid oil that was unrelated to the lemon aroma, the aroma strengthening effect was weaker than that observed in the beverages containing the added lemon oil I or lemon oil II, and no intensification of the carbonation sensation was observed. In the beverage of Example 9, which contained the added lemon oil IV that was an unmodified single oil, because the content ratio of terpenoids that represent the main components of the aroma was low, the aroma strengthening effect was weak in a similar manner to the lemon oil III, and although a carbonation sensation strengthening effect was not observed, the naturalness of the aroma was favorable.

In contrast, in the beverages of Comparative Examples 1 to 3, in which oily droplets of the lemon oil were not observed at the liquid surface, and the added lemon oil had not separated from the overall beverage (the overall base liquid), the orthonasal aroma and retronasal aroma were both weak, despite the fact that the terpenoid content within the entire beverage was the same as that of the beverage of Example 4. In the beverages of Comparative Examples 4 and 5, in which a lemon flavoring was dispersed uniformly within the beverage, the retronasal aroma strengthened concentration dependently, but the no strengthening of the orthonasal aroma was observed. Similarly, in the beverages of Comparative Examples 6 and 7, which contained added lemon juice, the lemon aroma was not strengthened.

### [Examples 11 to 16]

Oils of citruses other than lemon were added in a separated state from the beverage base liquid, and the effects on the aroma were investigated.

The citrus oils used were hydrophobic liquid compositions prepared by mixing a hydrophobic composition (single oil) extracted from the citrus peel, and a hydrophobic composition (folded oil) obtained by removing a portion of the terpene hydrocarbons from this single oil to increase the terpenoid content.

With the exception of using each oil instead of the lemon oil I, packaged beverages were produced in the same manner as Example 1, and then subjected to sensory evaluation. In all of the beverages, oil droplets were confirmed at the liquid surface of the beverage. The results are shown in Table 4.

**[Table 4]**

| | Example 11 | Example 12 | Example 13 | Example 14 | Example 15 | Example 16 |
|---|---|---|---|---|---|---|
| Lemon extract [g/L] | 0.20 | 0.20 | 0.20 | 0.20 | 0.20 | 0.20 |
| Lime oil [g/L] | 0.30 | | | | | |
| Orange oil [g/L] | | 0.30 | | | | |
| Grapefruit oil [g/L] | | | 0.30 | | | |
| Yuzu oil [g/L] | | | | 0.30 | | |
| Iyokan oil [g/L] | | | | | 0.30 | |
| Sudachi oil [g/L] | | | | | | 0.30 |
| Intensity of aroma upon opening (orthonasal aroma) | 5 | 5 | 5 | 5 | 5 | 5 |
| Intensity of aroma upon consumption (retronasal aroma) | 4 | 4 | 4 | 5 | 5 | 5 |
| Naturalness of aroma and flavor | 5 | 5 | 5 | 5 | 5 | 5 |
| Carbonation sensation | 5 | 3 | 5 | 3 | 4 | 3 |
| Alcoholic sensation | 2 | 3 | 2 | 2 | 2 | 1 |

The results revealed that in all of the beverages, the orthonasal aroma and the retronasal aroma were both strengthened in a similar manner to Example 4. Further, the alcoholic sensation results were all lower than the evaluation observed for the beverage of Example 1 (evaluation grade: 4), indicating that incorporating a citrus oil in a separated state from the base liquid lowered the alcoholic sensation. On the other hand, the carbonation sensation differed depending on the type of citrus, with a carbonation sensation enhancement effect similar to that of lemon oil confirmed for the lime oil and grapefruit oil, but no effect observed for the other citrus oils.

Production Examples 1 to 4 and Comparative Production Example 1 described below are examples of producing packaged beverages having the same composition as the packaged beverage of Example 4 using a series of different production methods.

### [Production Example 1]

First, 700 mL of a base liquid was prepared in the same manner as Example 4. Subsequently, 350 mL of the base liquid was used to fill each of the can bodies of two aluminum (alloy) two-piece cans. Subsequently, the same volume of the lemon oil I was dripped onto the liquid surface in each can, obtaining beverages in which the lemon oil was separated from, and floating on top of, the base liquid. Can lids (stay-on tab lids) coated with a sealing compound containing a styrene-butadiene rubber as the main component were then seamed onto the can body, thus completing production of packaged beverages contained in two-piece beverage cans.

The aluminum (alloy) two-piece cans that were used had a can body inner diameter of 65.9 mm (liquid surface area of the base liquid: 3.4 × 10⁻¹ m²) and an opening inner diameter of 54.9 mm (opening surface area: 2.4 × 10⁻³ m²), and the lemon oil I rebounded off the liquid surface during dripping, with some of the beverage, albeit a very small portion, being spilled outside the container.

The produced packaged beverages were left to stand for 24 hours, and upon subsequent opening, it was confirmed that the lemon oil I had separated from the base liquid and was floating on top of the base liquid. Furthermore, no differences in the external appearance of the beverages or sensory differences such as aroma were observed between the two produced packaged beverages.

Subsequently, the produced packaged beverages were held at an inclination of 45° for 24 hours so that the beverage inside the container was in contact with the can lid, and subsequent visual evaluation of the state of the sealing compound confirmed that the sealing compound had been eluted into the beverage.

### [Production Example 2]

First, 800 mL of a base liquid was prepared in the same manner as Example 4. Subsequently, 400 mL of the base liquid was used to fill each of the can bodies of two aluminum (alloy) bottle-shaped cans. Subsequently, the same volume of the lemon oil 1 was dripped onto the liquid surface in each can, obtaining beverages in which the lemon oil was separated from, and floating on top of, the base liquid. Subsequently, screw caps provided with a liner containing a long-chain low-density polyethylene as the main component were used as lids to complete production of packaged beverages contained in bottle-shaped cans.

The aluminum (alloy) bottle-shaped cans that were used had a can body inner diameter of 65.9 mm (liquid surface area of the base liquid: 3.4 × 10⁻³ m²) and an opening inner diameter of 35.4 mm (opening surface area: 1.0 × 10⁻³ m²), and when the lemon oil I was dripped onto the base liquid, none of the beverage was spilt outside the container.

The produced packaged beverages were left to stand for 24 hours, and upon subsequent opening, it was confirmed that the lemon oil I had separated from the base liquid and was floating on top of the base liquid. Furthermore, no differences in the external appearance of the beverages or sensory differences such as aroma were observed between the two produced packaged beverages.

The produced packaged beverages were held at an inclination of 30°C for 24 hours so that the beverage inside the container was in contact with the screw cap, and subsequent visual evaluation of the state of the liner revealed no changes such as elution, swelling or detachment of the liner material. Moreover, the state of the liner was checked a second time after storage for two weeks, and no change in the liner material was noticeable.

### [Production Example 3]

First, the same volume of the lemon oil I was dripped into the inside of the can body of two aluminum (alloy) bottle-shaped cans. Next, 800 mL of a base liquid was prepared in the same manner as Example 4, and 400 mL of this base liquid was added to can body of each of the bottle-shaped cans containing the dripped lemon oil I. Subsequently, screw caps provided with a liner containing a long-chain low-density polyethylene as the main component were used as lids for the can bodies, thus completing production of packaged beverages contained in bottle-shaped cans.

The produced packaged beverages were left to stand for 24 hours, and upon subsequent opening, it was confirmed that the lemon oil I had separated from the base liquid and was floating on top of the base liquid. Furthermore, no differences in the external appearance of the beverages or sensory differences were observed between the two produced packaged beverages.

### [Production Example 4]

First, 800 mL of a base liquid was prepared in the same manner as Example 4. Subsequently, the lemon oil I was added to this base liquid, and a homomixer was used to disperse the lemon oil 1 in the base liquid to obtain a dispersion. The thus obtained dispersion was placed in a container provided with a discharge port in the bottom of the container that was used for the filling operation, and the can bodies of two aluminum (alloy) bottle-shaped cans then were each filled with 400 mL of the dispersion. Subsequently, screw caps provided with a liner containing a long-chain low-density polyethylene as the main component were used as lids for the can bodies, thus completing production of packaged beverages contained in bottle-shaped cans.

The produced packaged beverages were left to stand for 24 hours, and upon subsequent opening, it was confirmed that the lemon oil 1 had separated from the base liquid and was floating on top of the base liquid. Furthermore, no differences in the external appearance of the beverages or sensory differences were observed between the two produced packaged beverages.

### [Comparative Production Example 1]

First, 800 mL of a base liquid was prepared in the same manner as Example 4. Subsequently, the lemon oil I was added to this base liquid, and a homomixer was used to disperse the lemon oil I in the base liquid to obtain a dispersion. The thus obtained dispersion was placed in a container provided with a discharge port in the bottom of the container that was used for the filling operation. One hour after completion of the homomixer treatment, at least a portion of the lemon oil I in the dispersion had separated from the base liquid and was floating on the liquid surface of the base liquid. In this state, the can bodies of two aluminum (alloy) bottle-shaped cans were each filled with 400 mL of the dispersion. Subsequently, screw caps provided with a liner containing a long-chain low-density polyethylene as the main component were used as lids for the can bodies, thus completing production of packaged beverages contained in bottle-shaped cans.

The two produced packaged beverages were left to stand for 24 hours, and upon subsequent opening, it was confirmed that the second filled can contained a larger amount of the lemon oil floating on the base liquid than the first filled can, and in terms of sensory evaluations, the second filled exhibited a stronger orthonasal aroma.

### [Test Example 1]

In order to confirm that in the packaged beverages of Example 4 and Example 6, the lemon oil was floating on the liquid surface, whereas in the packaged beverage of Comparative Example 1, the lemon oil was dispersed within the liquid and was not floating on the liquid surface, each packaged beverage was fractionated into four fraction by height, and the D-limonene concentration of each fraction was investigated.

First, each packaged beverage (400 mL bottle-shaped can) of Example 4, Example 6 and Comparative Example 1 was opened, the entire contents were poured into a cylindrical separating funnel, and the liquid was then left to stand for 30 minutes to allow the oil to float to the liquid surface. After standing for about 15 minutes, the oil had floated to the liquid surface.

Further, a packaged beverage was produced with the same composition as Example 4 with the exception of not adding the lemon oil I, and this beverage was termed Example 4'. The entire contents of this packaged beverage of Example 4' was poured into a cylindrical separating funnel, an amount of the lemon oil I equal to the amount of lemon oil 1 added to the beverage of Example 4 was added from the top of the cylindrical separating funnel, and the mixture was then left to stand for 30 minutes.

Subsequently, the first 30 mL was extracted from the spout of each cylindrical separating funnel and used as a fraction 1, the next 93.3 mL was discarded, the subsequent 30 mL was extracted as a fraction 2, the next 93.3 mL was discarded, the subsequent 30 mL was extracted as a fraction 3, the next 93.3 mL was discarded, and the final 30 mL was extracted as a fraction 4. The fraction 4 also included oil adhered to the cock of the cylindrical separating funnel, and therefore a cock washing liquid (ethanol: 10 mL) was also added. The d-limonene content of each of these four fractions was measured. Hexyl acetate was added as an internal standard to the measurement sample of each fraction, a liquid-liquid extraction into hexane was then conducted, and the resulting sample was supplied to GC/MS.

The D-limonene of each fraction was analyzed using the method described below.

First, 30 g of the sample was weighed into a 50 mL centrifuge tube, 100 µL of an ethanol solution of hexyl acetate, 6 g of sodium chloride and 10 mL of hexane were added, the tube was sealed, and an extraction was then conducted under conditions including wrist action shaking at 200 rpm for 20 minutes. The concentration of the added ethanol solution of hexyl acetate was 0.25 g/L for samples having a limonene content of 10 mg/L or less, 2.5 g/L for samples having a limonene content exceeding 10 mg/L but not more than 1,000 mg/L, and 25 g/L for samples having a limonene content exceeding 1,000 mg/L. The sample was then separated in a centrifuge at 3,000 rpm for 10 minutes, and the hexane layer was transferred to a 10 mL test tube containing 2.00 g of sulfuric anhydride and dewatered by standing for 30 minutes. Samples that used a 2.5 g/L ethanol solution of hexyl acetate were diluted 10-fold, samples that used a 25 g/L ethanol solution of hexyl acetate were diluted 100-fold, and each sample was analyzed by GC/MS under the following conditions.

### (GC/MS Conditions)

GC/MS device: HP7890A/5975C (manufactured by Agilent Technologies, Inc.)
Capillary column: DB-5MS (60 m × 0.25 mm × 0.25 µm, manufactured by Agilent Technologies, Inc.)
Carrier gas: helium
Flow rate: 1 mL/minute
Injection temperature: 250°C
Injection mode: splitless mode
Temperature program: hold at 40°C for 5 minutes → heat to 160°C at 5°C/minute → heat to 240°C at 10°C/minute → hold at 240°C for 10 minutes

Identification was conducted by measuring the mass spectrum using the electron impact ionization method in scanning mode. The results confirmed that the m/z values shown in Table 5 represented the main fragment ions of the analyzed components.

**[Table 5]**

| Name | m/z |
|---|---|
| | T-ion |
| Limonene | 121 |
| Hexyl acetate | 56 |

Measurement was conducted in SIM mode, and using the hexyl acetate as an internal standard, the limonene was quantified using the standard addition method.

**[Table 6]**

| | Limonene (ppm) | | | |
|---|---|---|---|---|
| Packaged beverage | Fraction 1 | Fraction 2 | Fraction 3 | Fraction 4 |
| Example 4 | 6.5 | 5.2 | 5.4 | 1672.1 |
| Example 4' | 0.0 | 0.0 | 0.0 | 2318.1 |
| Example 6 | 1.9 | 3.6 | 4.1 | 7110.8 |
| Comparative Example 1 | 74.4 | 19.9 | 63.0 | 23.2 |

The measurement results are shown in Table 6. In the table, a limonene concentration of 0.0 ppm indicates a value less than the limit of detection. The results revealed that in the case of the packaged beverages of Example 4 and Example 6, in which oil droplets were observed at the liquid surface of the beverage and an aroma strengthening effect was confirmed, the limonene was concentrated in the fraction 4 corresponding with the uppermost portion of the beverage (at the liquid surface inside the container). The other fractions container almost no limonene, and the limonene concentration of the fraction 4 was at least 100 times higher than the other fractions. In contrast, in the packaged beverage of Comparative Example 1, the action of the emulsifier meant that the limonene was dispersed substantially uniformly through all of the fractions.

## Claims

1. A packaged beverage comprising an edible aqueous solution and a hydrophobic droplet containing a hydrophobic aroma component, wherein the aqueous solution and the hydrophobic droplet are separated.

2. The packaged beverage according to Claim 1, wherein the hydrophobic droplet exists at a liquid surface of the aqueous solution.

3. The packaged beverage according to Claim 1 or 2, wherein the hydrophobic aroma component is a hydrophobic substance with a boiling point of 260°C or higher.

4. The packaged beverage according to any one of Claims 1 to 3, wherein a density of the hydrophobic droplet is lower than a density of the aqueous solution.

5. The packaged beverage according to any one of Claims 1 to 4, wherein the hydrophobic aroma component is an aroma component of a fruit.

6. The packaged beverage according to any one of Claims 1 to 5, wherein the hydrophobic droplet comprises a hydrophobic substance extracted from a plant.

7. The packaged beverage according to Claim 6, wherein the hydrophobic substance extracted from a plant is an essential oil.

8. The packaged beverage according to Claim 6 or 7, wherein the plant is a citrus plant.

9. The packaged beverage according to any one of Claims 1 to 8, wherein the hydrophobic droplet comprises a terpene.

10. The packaged beverage according to Claim 9, wherein the terpene comprises D-limonene.

11. The packaged beverage according to Claim 9 or 10, wherein a proportion of terpene hydrocarbons in the terpene is at least 80% by mass.

12. The packaged beverage according to any one of Claims 1 to 11, wherein the aqueous solution comprises an alcohol.

13. The packaged beverage according to any one of Claims 1 to 12, wherein the aqueous solution comprises carbon dioxide gas.

14. The packaged beverage according to any one of Claims 1 to 13, wherein the aqueous solution comprises a fruit juice or a fruit.

15. The packaged beverage according to any one of Claims 1 to 14, wherein the aqueous solution comprises an emulsifier and a hydrophobic aroma component.

16. The packaged beverage according to any one of Claims 1 to 15, wherein the beverage is packed in a bottle-shaped can, a flexible container or a glass bottle.

17. A method for producing a packaged beverage in which an edible aqueous solution and a hydrophobic droplet containing a hydrophobic aroma component are separated, the method comprising:
packing the aqueous solution in a container main body and subsequently adding a hydrophobic liquid composition comprising a hydrophobic aroma component, or packing the hydrophobic liquid composition in the container main body and subsequently adding the aqueous solution, and
subsequently sealing the container main body.

18. A method for producing a packaged beverage in which an edible aqueous solution and a hydrophobic droplet containing a hydrophobic aroma component are separated, the method comprising:
packing a solution prepared by mixing a hydrophobic liquid composition comprising a hydrophobic aroma component with the edible aqueous solution into a container main body, subsequently sealing the container, and then forming a hydrophobic droplet that is separated from the edible aqueous solution inside the container.

19. The method for producing a packaged beverage according to Claim 17 or 18, wherein an area of the opening of the container main body prior to sealing is not more than 70% of the surface area of a liquid surface of the edible aqueous solution packed inside the container main body.

20. The method for producing a packaged beverage according to Claim 19, wherein the container is a bottle-shaped can, a flexible container or a glass bottle.
